# EUROPEAN PATENT SPECIFICATION

(11) **EP 3 210 467 B1**
(45) Date of publication and mention of the grant of the patent: **25.03.2020**
(21) Application number: 17000279.4
(22) Date of filing: 21.02.2017
(51) Int. Cl.: A01M 7/00, A01D 45/28, A01D 45/30

(54) **WORKING VEHICLE**
ARBEITSFAHRZEUG
VEHICULE DE TRAVAIL

(30) Priority: 23.02.2016 JP 2016032037
(43) Date of publication of application: 30.08.2017
(73) Proprietor: Yanmar Co., Ltd., Osaka 530-8311 (JP)
(72) Inventor: Terashima, Jun, Osaka-shi Osaka, 530-8311 (JP)
(74) Representative: Hering, Hartmut

(56) References cited:
- EP-A1- 0 357 153
- WO-A1-2013/131026
- JP-A- H08 242 743
- JP-A- 2015 147 552

## Description

### Technical Field

The present invention relates to a working vehicle. More specifically, the present invention relates to a working vehicle used for a farm land where crops are planted with a plurality of rows formed.

### Background Art

There are many cases where crops such as tea and grapes as raw materials of wine are planted in a farm land with a plurality of rows formed from a point of view, for example, of improving efficiency in raising and managing such crops and of improving raising conditions such as sunlight and ventilation. In regard to managing operations such as fertilization, pruning, biocontrol, and harvest in such a farm land, they are carried out by moving between adjacent rows (a furrow) along the rows. From a point of view of production efficiency and the like, a width of the furrow or a path may be made narrow enough for two workers to pass each other so that it is difficult to introduce a large-size machine. Therefore, a working vehicle applicable to such a farm land has been proposed.

For example, Patent Literature 1 discloses a top-heavy sulky working machine for a tea garden configured to stride over a ridge of a tea plant and autonomously travel furrows in both sides of the ridge. The working machine herein includes a left-and-right pair of crawler traveling devices provided to both left and right legs of a body frame formed like a portal seen from a front view.

### Citation List

### Patent Literature

Patent Literature 1: JP H08-242743 A

### Summary of Invention

### Technical Problem

Herein, a working machine for a tea garden disclosed in Patent Literature 1 has a top-heavy configuration provided with, for example, an engine disposed in an upper part of a body frame formed like a portal seen from a front view, a hydraulic pump driven by the engine, and a driver's seat. Therefore, it is difficult for the working machine to travel stably in a farm land with many slope lands such as an orchard in some cases.

JP 2015 147552 A discloses a crawler type irregular ground work vehicle comprising a vehicle body frame, at least a pair of left and right crawler travel devices and a suspending device that suspends the pair of left and right crawler travel devices onto the vehicle body frame. The suspending device is constituted of: a pair of left and right towing arms, extended in a longitudinal direction, one ends of which are supported in the vehicle body frame to be rotatable in a lateral direction as a center and the other ends of which are supported in the crawler travel devices to be rotatable in the lateral direction as a center; a swinging arm that is extended in the lateral direction and supported in the vehicle body frame to be rotatable in the longitudinal direction as a center, at the center in the lateral direction; and a pair of left and right connection arms, one ends of which are connected to the swinging arm through a universal joint and the other ends of which are connected to the crawler travel device through a universal joint.

WO 2013/131026 A1 discloses a system and a method for subvehicularly accessed treatment of ground surfaces about a rail track occupied by a rail vehicle. A mobile treatment unit having a propulsion mechanism for subvehicular passage between the rails occupied by the rail vehicle includes a dispensing portion for expelling a treatment material therefrom onto regions of the ground surface about the rails. The mobile treatment unit is maneuverable between the rails and maintains height clearance for unobstructed passage beneath the occupying rail vehicle. At least one sensor unit is coupled to the mobile treatment unit, which acquires environmental feedback data about the mobile treatment unit. A control unit is operably linked to the mobile treatment and sensor units, and receives the environmental feedback data. The control unit controls actuation of the mobile treatment unit responsive to the environmental feedback and/or a maneuver control command.

EP 0 357 153 A1 discloses a mobile device for spraying plants in the field.

An object of the present invention is to provide a working vehicle having a low center of gravity and capable of traveling stably even in a farm land with narrow furrows and slope lands.

### Solution to Problem

In order to solve the abovementioned problem, a working vehicle of the present invention includes the features of claim 1. Advantageous further developments of the working features of claim 1. Advantageous further developments of the working vehicle of the present invention are shown in the dependent claims 2 to 8.

### Advantageous Effects of Invention

An embodiment of the present invention provides a working vehicle including a left-and-right pair of crawler traveling devices, and a connection frame configured to connect the left-and-right pair of crawler traveling devices. Each of the crawler traveling devices is configured to include built-in heavy goods such as a drive source so as to be independently movable, and the connection frame herein is formed like a portal having a predetermined height. According to an embodiment of the present invention, it is possible to provide the working vehicle having a low center of gravity and capable of traveling stably even in a farm land with narrow furrows and slope lands.

Further, the working vehicle may be configured to travel in a target forward direction by adjusting skids of the crawler traveling devices with respect to the ground so that it is possible to travel stably.

Still further, the working vehicle may include a control unit configured to control the crawler traveling devices, and a direction sensor configured to detect the forward direction. The drive source herein may be a motor, and each of the crawler traveling devices may include a rotary sensor configured to detect rotation frequency of the motor. The control unit herein may be configured to tune traveling speeds of the crawler traveling devices based on detection values of the direction sensor and the rotary sensor. Accordingly, it is possible to travel stably.

Still further, the direction sensor may be disposed in a substantial center of the connection frame in a horizontal direction. Accordingly, it is possible to travel stably.

Still further, each of the crawler traveling devices may include a built-in battery, and the drive source herein may be an electromotive motor. Accordingly, it is possible to provide a working vehicle having a low center of gravity and capable of traveling stably even in the farm land with the narrow furrows and slope lands.

Still further, at least one of the crawler traveling devices may include an engine and generator, and electric power generated in the generator may be accumulated in the battery. Accordingly, the crawler traveling devices can be operated continuously for a long period.

Still further, at least one of the crawler traveling devices may include an engine and pump, and the drive source herein may be a pressure motor. Accordingly, it is possible to provide the working vehicle having the low center of gravity and capable of traveling stably even in the farm land with the narrow furrows and slope lands.

Still further, each of the crawler traveling devices may include a covering configured to cover an upper part and both left and right sides of each of the crawler traveling devices, and a seat where a worker sits down may be attached to an upper part of the covering of at least one of the crawler traveling devices. Accordingly, it is possible to travel the furrow as the worker maintains his/her posture in a sitting position and it is possible to reduce the worker's burden due to, for example, hand picking in harvest operations.

Still further, a chemical spraying device configured to atomize chemicals toward between the left-and-right pair of crawler traveling devices may be detachably attached to the connection frame. Accordingly, it is possible to spray the chemicals efficiently in the farm land with the narrow furrows and slope lands.

Still further, the working vehicle may be configured to travel autonomously or to be controlled remotely so that it is possible to reduce workload in management. The working vehicle is such a user-friendly vehicle that it can be used as, for example, a vehicle for weeding, fertilizing, carrying a harvest, and the like by autonomous traveling.

### Brief Description of Drawings

Fig. 1 is a schematic side view illustrating a working vehicle as an example of an embodiment of the present invention.
Fig. 2 is a schematic plan view of the working vehicle in Fig. 1.
Fig. 3 is a schematic front view of the working vehicle in Fig. 1.
Fig. 4 is a schematic side view illustrating a configuration of a crawler traveling device.
Fig. 5 is a schematic side view illustrating an example of a state in which a storage box is attached to the working vehicle in Fig. 1.
Fig. 6 is a block diagram of principal parts illustrating an example of a control system of the working vehicle.
Fig. 7 is a schematic plan view illustrating an example of a farm land where grapes as an example of crops are planted.
Fig. 8 is a schematic side view of a fence of grapes illustrated in order to describe a planting condition of grapes.
Fig. 9 is a schematic side view illustrating an example of a working vehicle according to another embodiment.
Fig. 10 is a schematic plan view of the working vehicle in Fig. 9.
Fig. 11 is a schematic side view illustrating an example of a working vehicle according to another embodiment.
Fig. 12 is a schematic plan view of the working vehicle in Fig. 11.
Fig. 13 is a schematic front view of the working vehicle in Fig. 11.

### Description of Embodiments

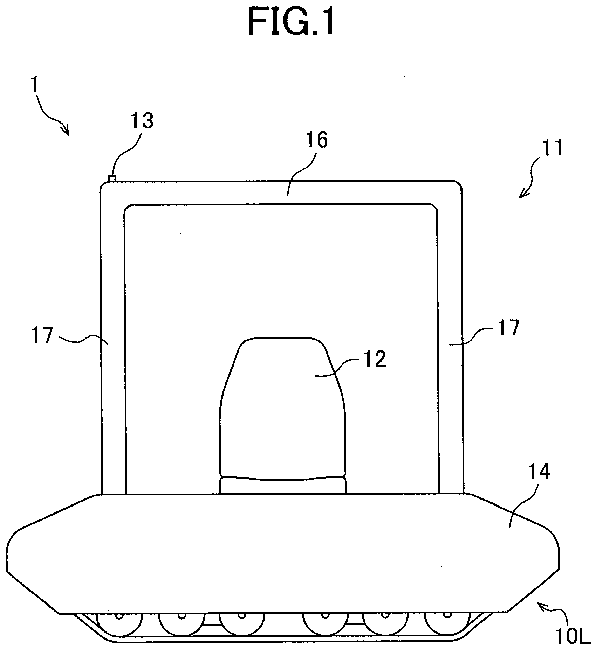

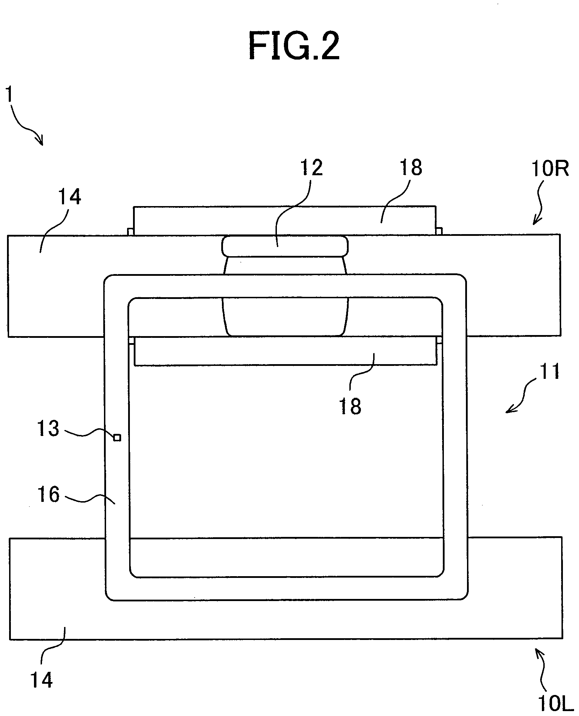

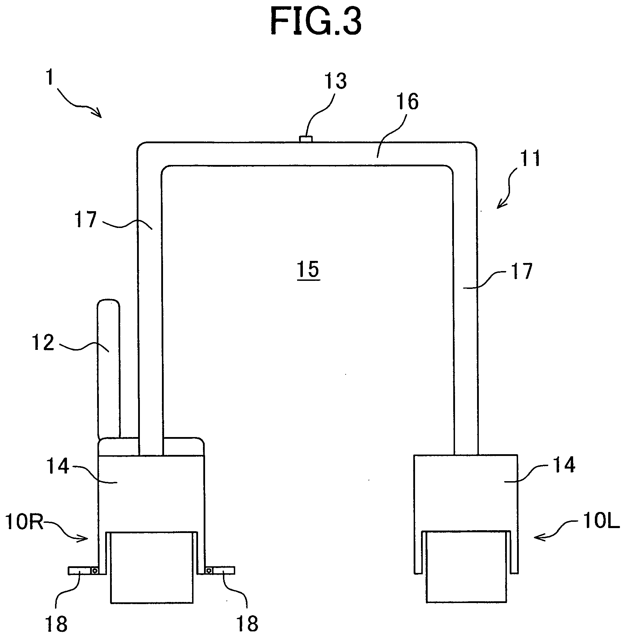

A detailed description will hereinafter be given of an embodiment of the present invention with reference to drawings. Fig. 1 is a schematic side view illustrating a working vehicle 1 as an example of an embodiment of the present invention. Fig. 2 is a schematic plan view of the working vehicle 1 in Fig. 1. Fig. 3 is a schematic front view of the working vehicle 1 in Fig. 1. Hereinafter, for the sake of convenience for description, a left hand in Fig. 1 will be referred to as a front forward direction, a deep side of Fig. 1 perpendicular and horizontal to the front forward direction will be referred to as a right direction, the other side is referred to as a left direction, an upper side in Fig. 1 perpendicular and vertical to the front forward direction will be referred to as an upward direction, and a lower side is referred to as a downward direction.

As illustrated in Fig. 1, Fig. 2, and Fig. 3, the working vehicle 1 includes a left-and-right pair of crawler traveling devices 10L, 10R, and a connection frame 11 connecting the left-and-right pair of crawler traveling devices 10L, 10R. The working vehicle 1 is configured to be substantially symmetrical in a longitudinal direction and horizontal direction. The working vehicle 1 further includes a seat 12 attached to the right-hand crawler traveling device 10R, a direction sensor 13 attached to the connection frame 11, and an unillustrated controller and control unit. Each of the left and right crawler traveling devices 10L, 10R includes a covering 14 configured to cover an upper part and both left and right sides of each crawler traveling device. Each of the left and right crawler traveling devices 10L, 10R is provided with built-in heavy goods such as a motor as a drive source, and a battery so as to be independently movable. Details will be described later. Furthermore, the working vehicle 1 has a configuration in which no heavy goods are attached to an upper part of the connection frame 11 and has a low center of gravity.

The connection frame 11 is obtained by connecting a plurality of steel materials such as a cylindrical pipe by welding or the like. The connection frame 11 seen from a front view is formed like a portal having a predetermined height. Between the left and right crawler traveling devices 10L, 10R, a substantially rectangular space 15 seen from the front view is opened from a front end to a rear end, extending to the ground. Although details will be described later, it should be noted that the predetermined height is higher than crops cultivated in a farm land where the working vehicle 1 is used.

More specifically, the connection frame 11 includes an upper frame 16 formed in a substantially square ring shape seen from a plan view, and four supporting frames 17, 17, 17, 17 extending downward from each vertex of the upper frame 16. A bottom end of each of the supporting frames 17, 17, 17, 17 is fixed to upper parts of a front and back of the covering 14 of the right-hand crawler traveling device 10R as well as upper parts of a front and back of the covering 14 of the left-hand crawler traveling device 10L. The left and right crawler traveling devices 10L, 10R are connected by the connection frame 11. The substantially rectangular space 15 seen from the front view is formed, surrounded by the upper frame 16, the supporting frames 17, 17, 17, 17, and the left and right crawler traveling devices 10L, 10R. The space 15 extending to the ground is opened from the front end to the rear end of the working vehicle 1.

It should be noted that the abovementioned configuration of the connection frame 11 is not restricted. Preferably, the connection frame 11 is configured to connect the left and right crawler traveling devices 10L, 10R and formed like a portal having the predetermined height and formed with the space 15 extending to the ground, opened from the front end to the rear end. The connection frame 11 may also be configured to include the supporting frames 17 fixed to side parts of the covering 14, and a plurality of plate-like members may be included in the connection frame 11. The connection frame 11 may also be formed in a substantially triangle shape or trapezoidal shape seen from a side view.

A direction sensor 13 is attached to a substantial center in the horizontal direction of a front part of the upper frame 16. The direction sensor 13 is a sensor which detects a forward direction of the working vehicle 1. It should be noted that a type of the sensor is not restricted. Applicable examples herein include a magnetic sensor, a gyro sensor, a detector using a global navigation satellite system (GNSS), and a detector in which these examples are combined. A disposition or the number of the direction sensor 13 should not be restricted.

The seat 12 facing the left side is attached to the upper part of the covering 14 of the right-hand crawler traveling device 10R. Foot plates 18 extending in the horizontal direction, projecting outward of both left and right sides are attached to the right-hand crawler traveling device 10R including the seat 12 attached thereto. The foot plates 18 are attached to each bottom end of both left and right sides of the covering 14. It should be noted that the foot plates 18 are attached so as to rotate upward along the side parts of the covering 14. A worker sits down on the seat 12 and puts his/her feet on the foot plates 18. The worker rides the vehicle while facing the left side and carries out traveling operations by the unillustrated controller.

Herein, the seat 12 is attached to the covering 14 rotatably around an axis in a vertical direction. Therefore, the working vehicle 1 is configured to change a direction of the seat 12 with respect to the covering 14 so as to change a direction of the worker while riding the vehicle. The worker can ride the vehicle, facing the right side or the worker can ride the vehicle, striding over the covering 14 so as to face the front or back. When the worker does not put his/her feet on the foot plates 18, they can be stored along the side parts of the covering 14, which makes the working vehicle 1 compact.

The seat 12 should not be restricted to the abovementioned configuration but may be configured to include an armrest or not to include a back rest. The seat 12 may also be fixed to the upper part of the covering 14 or may be attached to the upper part of the covering 14 slidably in the longitudinal direction or may be attached to an upper part of the covering 14 of the left-hand crawler traveling device 10L. The working vehicle 1 may also be configured to include a plurality of seats 12. Alternatively, the working vehicle 1 may be configured not to include any seat 12 so that the worker can ride the vehicle, sitting on the covering 14 directly.

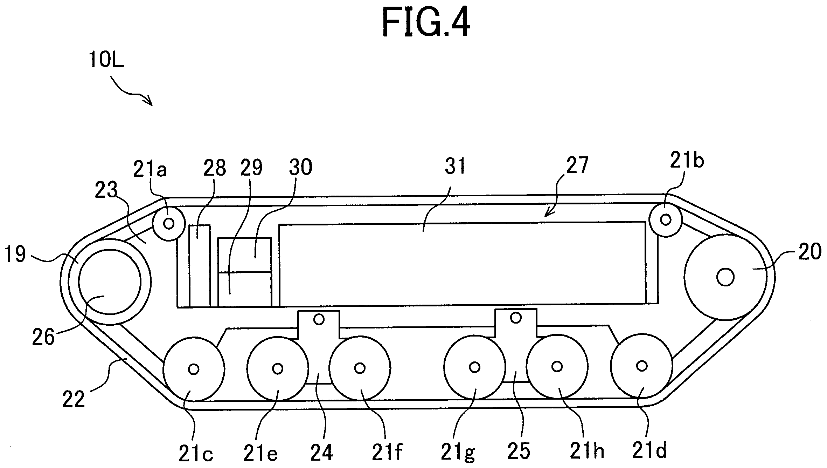

Hereinafter, the left-and-right pair of crawler traveling devices 10L, 10R will be described. It should be noted that the left and right crawler traveling devices 10L, 10R are substantially symmetrical so that the crawler traveling device 10L in the left side is chosen to be described herein. Fig. 4 is a schematic side view illustrating a configuration of the crawler traveling device 10. Fig. 4 illustrates the left-hand crawler traveling device 10L and descriptions of the covering 14 and the like are omitted.

The crawler traveling device 10L includes, for example, a driving wheel 19, coupled driving wheel 20, eight rolling wheels 21a to 21h, crawler belt 22, truck frame 23, two equalizer arms 24, 25, and motor 26 as the drive source driving the crawler traveling device 10L. The truck frame 23 supports the driving wheel 19, coupled driving wheel 20, and eight rolling wheels 21a to 21h. The covering 14, not illustrated herein, is attached to the truck frame 23. The driving wheel 19 is disposed in a front end, and the coupled driving wheel 20 is disposed in a rear end. Two rolling wheels 21a, 21b are disposed higher than the driving wheel 19 and coupled driving wheel 20, and six rolling wheels 21c, 21d, 21e, 21f, 21g, 21h are disposed lower than the driving wheel 19 and coupled driving wheel 20. Two rolling wheels 21e, 21f are attached to the truck frame 23 through the equalizer arm 24, and two rolling wheels 21g, 21h are attached to the truck frame 23 through the equalizer arm 25. Due to the equalizer arms 24, 25, it is possible to absorb impact while traveling the vehicle and to improve travelability and riding comfort. The crawler belt 22 is wound around the driving wheel 19, coupled driving wheel 20, and eight rolling wheels 21a to 21h so as to be in contact with those wheels externally. The crawler traveling device 10L is formed in a substantially hexagonal shape seen from a side view in which the driving wheel 19, coupled driving wheel 20, and four rolling wheels 21a, 21b, 21c, 21d are the vertexes.

The truck frame 23 includes a recess 27 recessed downward between the two rolling wheels 21a, 21b placed at an upper part of the truck frame 23. The recess 27 is provided with a fan 28 as a cooling device, an inverter 29, a control unit 30, a battery 31, and the like. It should be noted that members disposed in the recess 27 are not restricted and may be designed appropriately. For example, the recess 27 may store tools and the like. The cooling device should not be restricted to the fan 28, but may be a device which uses a coolant.

The motor 26 is disposed in the driving wheel 19 in an in-wheel shape. The driving wheel 19 is rotated by drive power of the motor 26 so as to drive the crawler traveling device 10L. The crawler traveling device 10L also includes an unillustrated tension adjustment device, unillustrated brake device, unillustrated rotary sensor, and the like. The tension adjustment device is configured to adjust tension of the crawler belt 22 by moving a position of the coupled driving wheel 20 with respect to the truck frame 23. The brake device is configured to stop rotation of the driving wheel 19. The rotary sensor is configured to detect rotation frequency of the motor 26.

The motor 26 configured to drive the crawler traveling device 10L is an electromotive motor which is driven by electric power of the battery 31 and is controlled by the control unit 30. Herein, the crawler traveling device 10L is provided with built-in weighty heavy goods such as the fan 28, inverter 29, control unit 30, and battery 31 as well as the motor 26 as the drive source. The crawler traveling device 10L is configured to be independently movable. It should be noted that the control unit 30 is configured to control the motor 26 in each of the left and right crawler traveling devices 10L, 10R and is disposed only in the left-hand crawler traveling device 10L.

Preferably, the crawler traveling device 10L may have an independently movable configuration provided with the built-in heavy goods including the motor 26 as the drive source. Herein, the dispositions of the driving wheel 19, coupled driving wheel 20, rolling wheel 21, motor 26, and the like as well as the number of the rolling wheel 21 should not be restricted. For example, the crawler traveling device 10L may be formed in an isosceles trapezoidal shape seen from the side view and may not include the equalizer arms 24, 25. The motor 26 may not be formed in the in-wheel shape and may have a configuration in which an output axis of the motor 26 is coupled to an axis of the driving wheel 19 through a power transmission member such as a chain and gear.

The working vehicle 1 having the abovementioned configuration includes the left and right crawler traveling devices 10L, 10R each provided with the built-in motor 26 as the drive source, fan 28, inverter 29, control unit 30, battery 31, and the like, and the heavy goods are not disposed in the connection frame 11, especially in the upper frame 16. Accordingly, the working vehicle 1 is configured to include the left and right crawler traveling devices 10L, 10R provided with the heavy goods integrally and to have the lower center of gravity so that it is possible to travel stably even in slope lands.

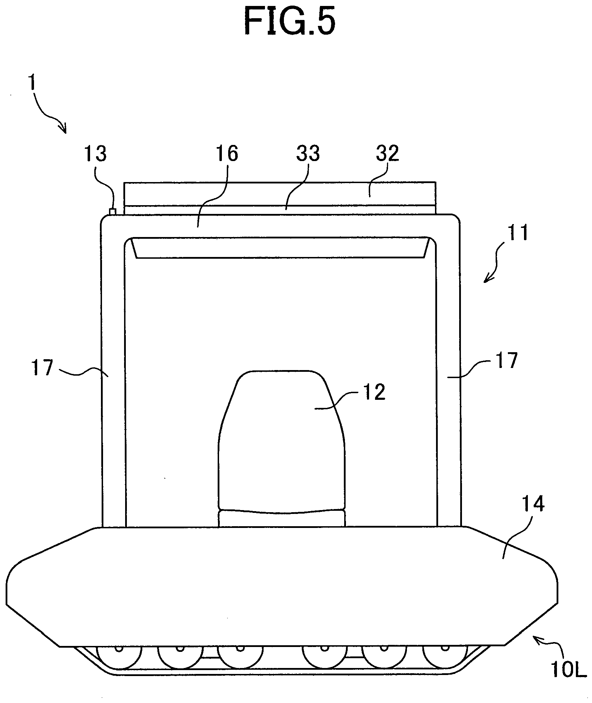

It should be noted that the working vehicle 1 is configured to be usable with various devices and tools for management attached to the connection frame 11 and the like. For example, as illustrated in Fig. 5, the working vehicle 1 is also usable with a storage box 32 which stores a harvest mounted on the connection frame 11. Herein, Fig. 5 is a schematic side view illustrating an example of a state in which the storage box 32 is attached to the working vehicle 1 in Fig. 1. The storage box 32 is a cuboid box having an opening on an upper surface thereof and includes flanges 33 projecting outward, disposed in side surfaces of the storage box 32. Fitted from above the upper frame 16 formed in the substantially square ring shape, the storage box 32 is attached to the connection frame 11. From a safety point of view, it is preferable that the heavy goods are not disposed in the upper part of the connection frame 11. The various devices and the like attached to the connection frame 11 are preferably attached so that each center of gravity will not be placed higher than the upper frame 16 which is a top end of the connection frame 11.

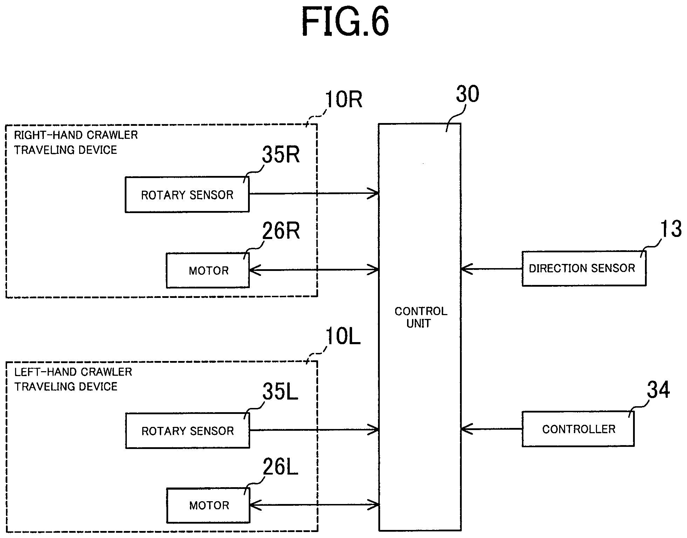

A control system of the working vehicle 1 according to the present embodiment will be hereinafter described. Fig. 6 is a block diagram of principal parts illustrating an example of the control system of the working vehicle 1. The working vehicle 1 includes the control unit 30 as mentioned above, and movements of the left and right crawler traveling devices 10L, 10R are controlled by the control unit 30. The working vehicle 1 is configured to travel in a target forward direction by adjusting skids of the left and right crawler traveling devices 10L, 10R with respect to the ground.

The control unit 30 is configured to read various setting values and input signals such as detection values obtained from various sensors. The control unit 30 is also configured to output control signals so as to control the operations of the working vehicle 1. Example of the control unit 30 includes microcomputer having a central processing unit (CPU) which carries out arithmetic processing and control processing, main storage device in which data is stored, timer, input circuit, output circuit, power source circuit and the like. Examples of the main storage device include a read only memory (ROM), and electrically erasable programmable read only memory (EEPROM). Such a main storage device stores various data as well as control programs in order to carry out operations according to the present embodiment. It should be noted that the various programs, data, and the like may also be stored in an outside storage device and the control unit 30 may read them out.

The configuration of the control unit 30 should not be restricted. The working vehicle 1 may be configured to include a plurality of control units, for example, the left-hand crawler traveling device 10L and right-hand crawler traveling device 10R each may include a control unit so that each crawler traveling device can communicate with each other through communication of the working vehicle 1 such as a controller area network (CAN) communication. Fig. 6 illustrates a configuration in which operations of the left and right crawler traveling devices 10L, 10R are controlled by one control unit 30.

The control unit 30 is electrically connected with the direction sensor 13, a controller 34 as an input device operated by the worker, a rotary sensor 35R configured to detect rotation frequency of a motor 26R of the right-hand crawler traveling device 10R, the motor 26R of the right-hand crawler traveling device 10R, a rotary sensor 35L configured to detect rotation frequency of a motor 26L of the left-hand crawler traveling device 10L, the motor 26L of the left-hand crawler traveling device 10L, and the like. The control unit 30 is electrically connected with various devices, sensors, and switches other than those illustrated in Fig. 6. For example, the control unit 30 is electrically connected with a battery sensor configured to detect voltage and electric current of the battery 31, a speed sensor configured to detect a speed of the vehicle, and a speed control switch configured to control the speed to a predetermined speed.

The rotary sensors 35L, 35R are preferably configured to detect the rotation frequency of the motors 26L, 26R and types of the sensors should not be restricted. For example, a potentiometer and encoder are applicable. The rotary sensors 35L, 35R may also be configured to detect the rotation frequency of the driving wheel 19 and coupled driving wheel 20, or the number of rotation of the crawler belt 22.

For example, the control unit 30 is configured to output control signals to the motors 26L, 26R of the left and right crawler traveling devices 10L, 10R based on operation signals from the controller 34 so as to change a traveling speed of the working vehicle 1 or to travel rotatably. Furthermore, the control unit 30 is configured to control the motors 26L, 26R so as to tune traveling speeds of the left and right crawler traveling devices 10L, 10R (rotation speed of the crawler belt 22) based on detection values of the direction sensor 13 and two rotary sensors 35R, 35L.

For example, in a case where the controller 34 inputs to the control unit 30 operation signals for traveling straight at a predetermined speed, the control unit 30 outputs to the motors 26L, 26R control signals for rotating at predetermined frequency. Herein, when the left and right crawler traveling devices 10L, 10R skid (run idle) on the ground, there may be a difference between the traveling speeds of the left and right crawler traveling devices 10L, 10R (rotation speed of the crawler belt 22) so that the working vehicle 1 may rotates. Accordingly, the control unit 30 is configured to carry out adjustment with respect to such skids of the left and right crawler traveling devices 10L, 10R and tune the traveling speeds of the left and right crawler traveling devices 10L, 10R and control the motors 26L, 26R so as to travel in accordance with the operation signals from the controller 34. Therefore, the working vehicle 1 is prevented from rotating unexpectedly due to the skids of the crawler traveling devices 10L, 10R with respect to the ground and the working vehicle 1 can travel stably.

More specifically, the control unit 30 determines whether there are skids of the left and right crawler traveling devices 10L, 10R based on the detection values of the direction sensor 13 and rotary sensors 35L, 35R with respect to the operation signals from the controller 34. When there are skids, the control unit 30 is configured to output to the motors 26L, 26R control signals adjusted for preventing the skids.

It should be noted that controls of the left and right crawler traveling devices 10L, 10R carried out by the control unit 30 are not restricted to the abovementioned configuration. It is preferable that the left and right crawler traveling devices 10L, 10R are configured to travel in the target forward direction by adjusting the skids of the crawler traveling devices 10L, 10R with respect to the ground. For example, the control unit 30 may be configured to tune the traveling speeds of the crawler traveling devices 10L, 10R based on a detection value of the speed sensor as well as the detection values of the direction sensor 13 and the rotary sensors 35L, 35R. Due to such a configuration, it is possible to tune the traveling speeds with much higher reliability and the working vehicle 1 can be surely prevented from rotating unexpectedly due to the skids of the crawler traveling devices 10L, 10R with respect to the ground. Therefore, it is possible to travel stably.

From a point of view of improving reliability, it is preferable that the direction sensor 13 is disposed in the center in the horizontal direction of the working vehicle 1, and it is also preferable that a plurality of direction sensors 13 is disposed. Accordingly, it is possible to surely prevent the unexpected rotation and the like, which leads to a stable traveling.

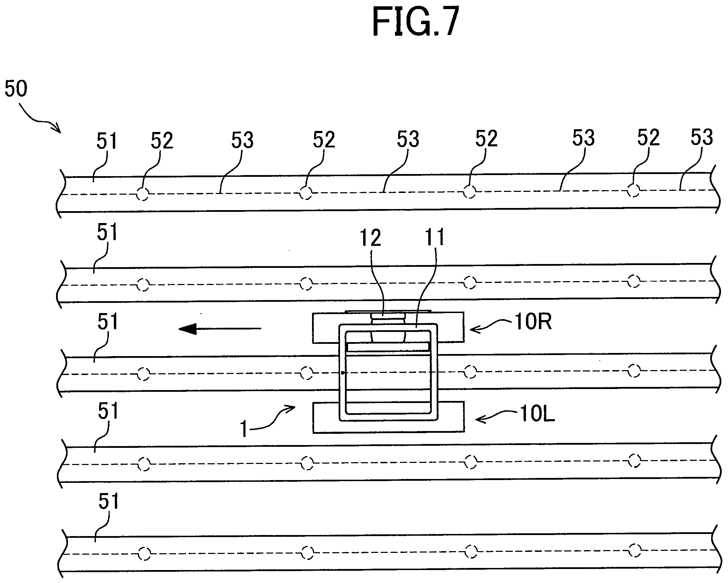

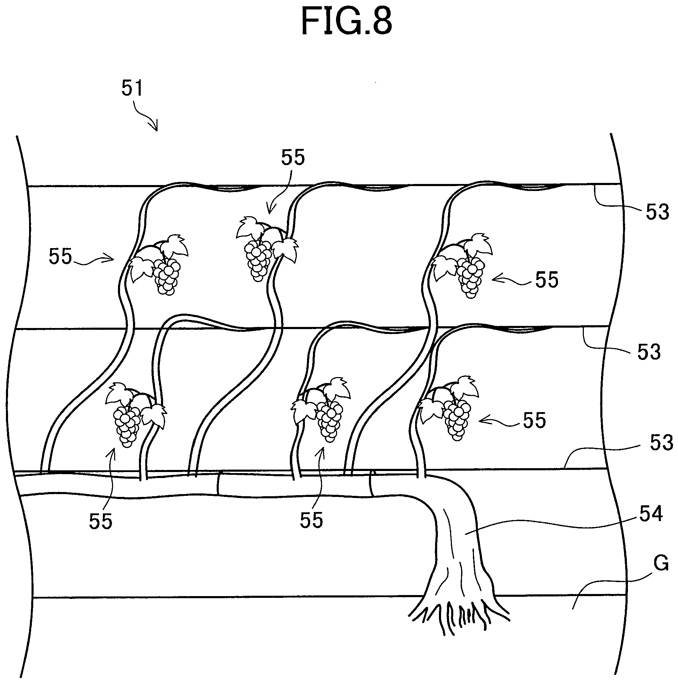

Next, the management using the working vehicle 1 will be described. Hereinafter described is a harvest operation of the crops which is one of the management. Fig. 7 is a schematic plan view illustrating an example of a farm land 50 where grapes as an example of the crops are planted. Fig. 8 is a schematic side view of one fence of grapes 51 for description of a planting condition. It should be noted that an arrow in Fig. 7 indicates a partial path of the working vehicle 1 in the farm land 50.

Grapes used as raw materials of wine may be planted by forming a plurality of fence-like rows in the farm land 50, as illustrated in Fig. 7 and Fig. 8, from a point of view, for example, of improving efficiency in raising and managing grapes, and of improving raising conditions such as sunlight and ventilation. The fences of grapes 51 forming such rows are formed by using a plurality of stakes 52, ropes 53, and the like. The stakes 52 are disposed linearly at a substantially equal interval in the farm land 50. A plurality of ropes 53 having different heights is extended between the adjacent stakes 52. Grapevines 54 are planted along the rows of the stakes 52 at a substantially equal interval. As illustrated in Fig. 8, each trunk of grapevine 54 is fixed to a rope 53 which is placed at a lower part and is raised so as to extend along this rope 53. Tendrils extending from each trunk of grapevine 54 creep along other ropes 53 so as to form each fence of grapes 51.

The grapevine 54 is raised, subjected to pruning and the like so that bunches of grapes 55 will grow, forming two rows in the top and bottom, at positions having predetermined heights, for example, 500 mm to 1000 mm from the ground G. In other words, the bunches of grapes 55 will have heights near the hands of the worker sitting down on a chair and the like. From a point of view of production efficiency and the like, a width between the fences of grapes 51 (furrow) forming a plurality of rows is made narrow enough for two workers to pass each other, that is, for example, 1000 mm to 1500 mm.

It should be noted that each stake 52, each rope 53, and the like are not restricted, but it is preferable to use those with less influences on the ground G. A preferable example of each stake 52 includes wood such as a log, and a preferable example of each rope 53 includes one that is formed by biodegradable plastic.

In the abovementioned farm land 50 where the grapes are planted, the working vehicle 1 places each of the left and right crawler traveling devices 10L, 10R at the adjacent furrows and travels while each fence of grapes 51 passes through the space 15 formed between the left and right crawler traveling devices 10L, 10R. In other words, the working vehicle 1 travels so as to stride over each fence of grapes 51. It should be noted that the connection frame 11 is higher than each fence of grapes 51 and the upper frame 16 is placed higher than a top end of each fence of grapes 51. Therefore, each fence of grapes 51 passes through the space 15 without coming into contact with the working vehicle 1.

The seat 12, facing the left side, is attached to the right-hand crawler traveling device 10R so that the worker who rides the vehicle will face the right side of each fence of grapes 51 passing through the space 15. The worker in a sitting position cuts peduncles of the bunches of grapes 55 in front of him/her with cutting tools such as scissors and then the worker picks the bunches of grapes 55. It should be noted that the picked bunches of grapes 55 may be stored, for example, in the storage box 32 attached to the connection frame 11 illustrated in Fig. 5 or in an unillustrated storage box disposed in the farm land 50.

Herein, the working vehicle 1 can travel the furrow while the worker keeps his/her operational posture at the sitting position, which reduces the burden on the worker and improves efficiency of the harvest operations. The working vehicle 1 is such a user-friendly vehicle that it can change the direction of the seat 12 with respect to the covering 14 and the direction of the worker as well while riding the vehicle in accordance with conditions of the farm land 50. For example, supposed that the direction of the seat 12 is set to be in the forward direction (the front) and that the worker sits down, facing the forward direction and striding over the covering 14. It is possible to simultaneously harvest the bunches of grapes 55 growing on the fence of grapes 51 which passes through the space 15 and the bunches of grapes 55 growing on the fence of grapes 51 on the right side of the worker, which improves the efficiency of the harvest operations.

Furthermore, one crawler traveling device 10 is disposed in one furrow and the working vehicle 1 travels so as to stride over each fence of grapes 51. Therefore, the width of the furrow is preferably formed wider than at least a width of the crawler traveling device 10 in the horizontal direction. Accordingly, the working vehicle 1 can travel even in a narrow furrow where a large-size machine cannot travel.

The working vehicle 1, having the low center of gravity, is configured to include the heavy goods such as the motors 26L, 26R as the drive sources integrally disposed in the left and right crawler traveling devices 10L, 10R so that the working vehicle 1 can travel stably even when the farm land 50 includes the slope lands.

The control unit 30 further controls the motors 26L, 26R based on the detection values of the direction sensor 13 and two rotary sensors 35L, 35R so as to tune the traveling speeds of the left and right crawler traveling devices 10L, 10R (rotation speed of the crawler belt 22). Accordingly, the working vehicle 1 can be prevented from rotating unexpectedly due to the skids of the crawler traveling devices 10L, 10R with respect to the ground so that the working vehicle 1 can travel stably. The worker can concentrate further on an operation of picking the bunches of grapes 55 rather than an operation of traveling the working vehicle 1, which improves the efficiency of the harvest operations.

Furthermore, the working vehicle 1 is configured to be substantially symmetrical in the longitudinal direction and the worker can ride on the vehicle at the sitting position facing the sides of the working vehicle 1. Therefore, operability may not be easily deteriorated when switching the direction. For example, it is possible to easily rotate by a switchback method in which the vehicle rotates with the direction changed back and forth.

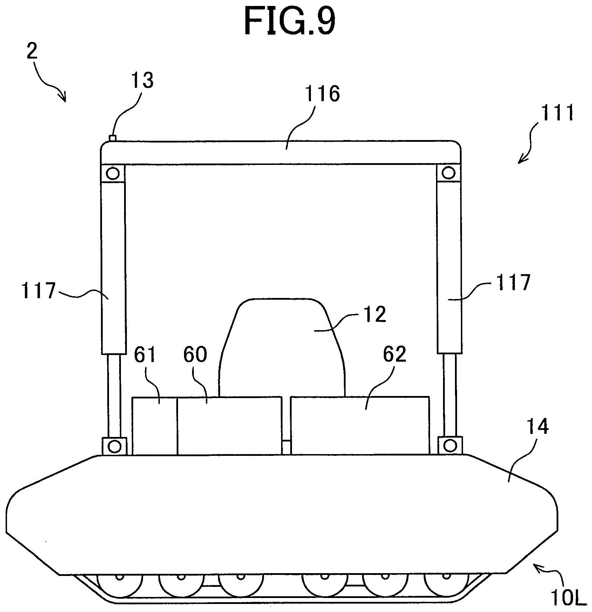

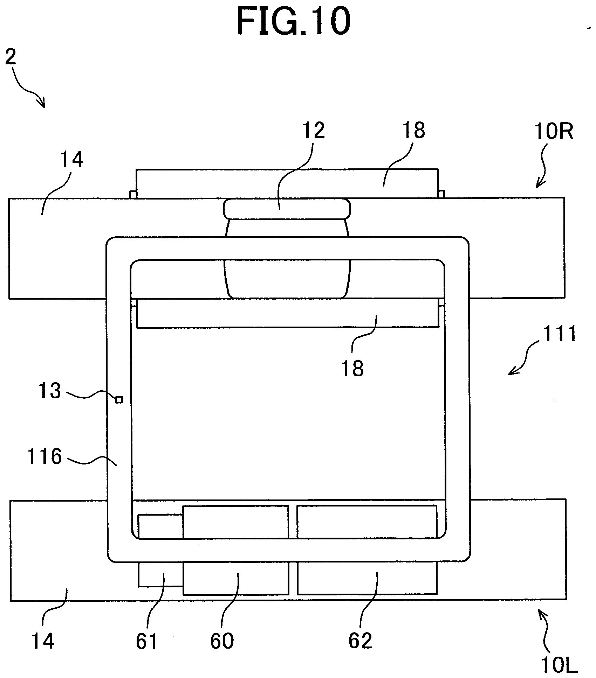

Herein, the present embodiment should not be restricted to the abovementioned configuration. The present embodiment may also include an engine in addition to the battery 31 or may be, for example, a working vehicle 2 illustrated in Fig. 9 and Fig. 10. Fig. 9 is a schematic side view illustrating an example of the working vehicle 2 according to another embodiment. Fig. 10 is a schematic plan view of the working vehicle 2 in Fig. 9. It should be noted that the working vehicle 1 provided with an engine 60 and a connection frame 111 stretchable in the vertical direction in place of the connection frame 11 makes the working vehicle 2. The working vehicle 2 has a configuration similar to that of the working vehicle 1 except for configurations in regard to the engine 60, connection frame 111, and the like and description of the similar configuration will be omitted properly.

The working vehicle 2 includes a left-and-right pair of crawler traveling devices 10L, 10R, the connection frame 111 configured to connect the left-and-right pair of crawler traveling devices 10L, 10R, a seat 12 attached to the right-hand crawler traveling device 10R, a direction sensor 13 attached to the connection frame 111, the engine 60, a generator 61 driven by the engine 60, a fuel tank 62, an unillustrated controller, and the like.

A covering 14 is attached to each of the left and right crawler traveling devices 10L, 10R, and the covering 14 of the right-hand crawler traveling device 10R includes foot plates 18. Each of the left and right crawler traveling devices 10L, 10R further includes built-in weighty heavy goods such as a motor as a drive source, fan, inverter, control unit, and battery which are not illustrated.

The engine 60, generator 61, and fuel tank 62 are disposed in an upper part of the covering 14 of the left-hand crawler traveling device 10L. Electricity generated by the generator 61 is accumulated in the batteries included in the left and right crawler traveling devices 10L, 10R. Accordingly, the working vehicle 2 can be operated continuously for a long period, which improves efficiency of the management. Furthermore, the heavy goods such as the engine 60, generator 61, and fuel tank 62 are not disposed in the connection frame 111 but in the left-hand crawler traveling device 10L. The working vehicle 2 is configured to have a low center of gravity so that it is possible to travel stably even in the slope lands.

It should be noted that the engine 60 and generator 61 may be run by operations of the worker and may run in accordance with an amount of charge of the batteries. Dispositions and the numbers of the engine 60, generator 61, and fuel tank 62 should not be restricted. Such members may also be attached to the right-hand crawler traveling device 10R and the seat 12 may be also attached to the left-hand crawler traveling device 10L. Furthermore, one crawler traveling device 10 may be configured to include a built-in engine 60 and generator 61 or both left and right crawler traveling devices 10L, 10R may be configured to include the engine 60 and generator 61.

The connection frame 111 seen from a front view is formed like a portal having a predetermined height. Between the left and right crawler traveling devices 10L, 10R, a substantially rectangular space seen from a front view is opened from a front end to a rear end, extending to the ground. More specifically, the connection frame 111 includes an upper frame 116 formed in a substantially square ring shape seen from a plan view, and four supporting frames 117, 117, 117, 117 extending downward from each vertex of the upper frame 116. Each supporting frame 117 is a stretchable stick-like member. An example of the supporting frame 117 herein is an electromotive cylinder including a ball screw, a motor, and the like. It should be noted that it is preferable that each supporting frame 117 is the stretchable stick-like member. Each supporting frame 117 may also be, for example, a stretchable arm in which two cylindrical members are combined and one cylindrical member is inserted in the other cylindrical member.

The connection frame 111 having such a configuration is stretchable in the vertical direction by changing lengths of the four supporting frames 117, 117, 117, 117 and a position of the upper frame 116 is movable in the vertical direction. In other words, the working vehicle 2 can change a size of the space formed between the left and right crawler traveling devices 10L, 10R by the connection frame 111. Therefore, the working vehicle 2 is such a user-friendly vehicle that it can change the size in the vertical direction of the space formed between the left and right crawler traveling devices 10L, 10R in accordance with sizes of crops in the vertical direction in a farm land such as the farm land 50 where the crops are planted with rows formed. Accordingly, it is possible to broaden an area in the farm land where the working vehicle 2 is applicable.

It should be noted that the connection frame 111 may also be stretchable in the horizontal direction. In such a configuration, a stretchable stick-like member may be applicable as an example of a member stretching in the horizontal direction of the upper frame 116, as similar to the supporting frame 117. Due to such a configuration, the working vehicle 2 is such a user-friendly vehicle that it can change a size in the horizontal direction of the space formed between the left and right crawler traveling devices 10L, 10R in the farm land such as the farm land 50 where the crops are planted with the rows formed in accordance with a distance between adjacent furrows, that is, sizes of the crops in the horizontal direction. Accordingly, it is possible to broaden the area in the farm land where the working vehicle 2 is applicable.

Each motor herein to drive each crawler traveling device 10 should not be restricted to an electromotive motor. For example, each motor may be a pressure motor driven by pressure of fluid. In a case of driving each crawler traveling device 10 by the pressure motor, the present embodiment is configured to include an engine, as similar to the working vehicle 2, and a pump driven by the engine. The pump runs pressure motors and drives crawler traveling devices 10. Even in such a configuration, it is possible to obtain effects similar to the working vehicle 1 and working vehicle 2.

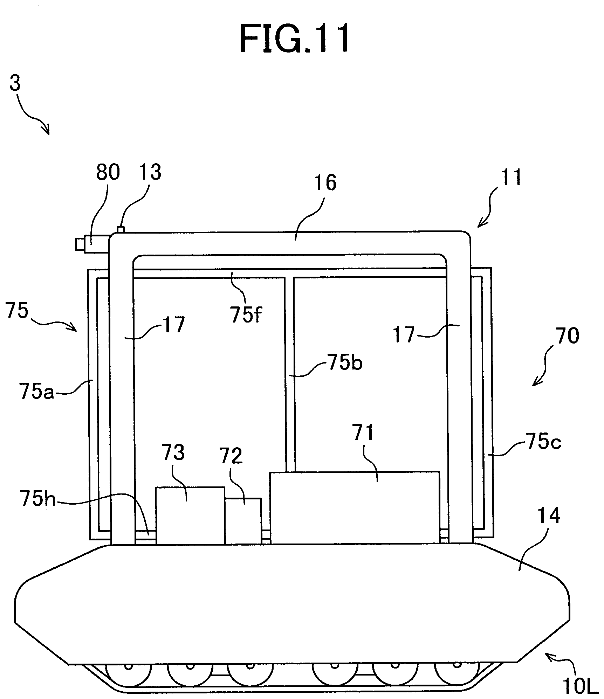

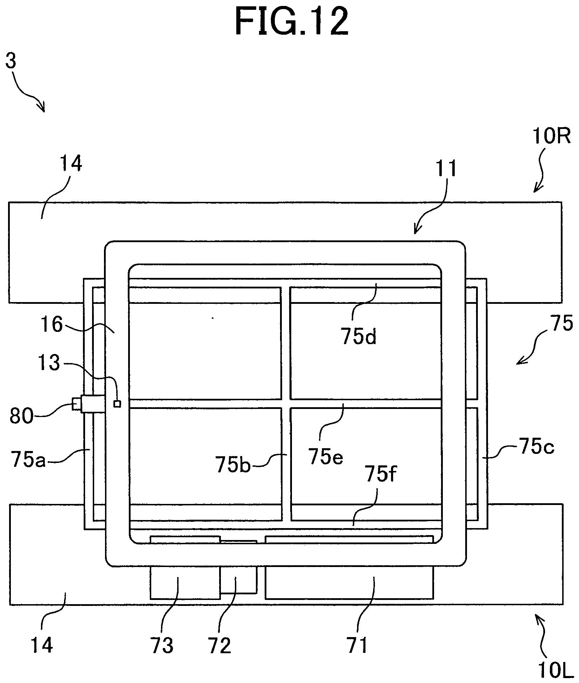

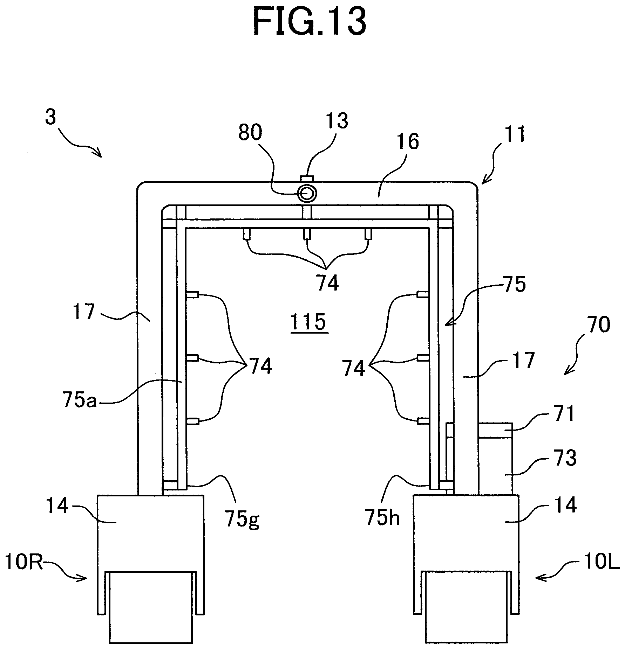

The present embodiment may have a configuration in which autonomous traveling, being remotely controlled, or both of them are possible. For example, as illustrated in Fig. 11, Fig. 12, and Fig. 13, the present embodiment may not include a seat where the worker sits down and may be a working vehicle 3 including a chemical spraying device 70 and the like which atomizes chemicals. Fig. 11 is a schematic side view illustrating an example of the working vehicle 3 according to another embodiment. Fig. 12 is a schematic plan view of the working vehicle 3 in Fig. 11. Fig. 13 is a schematic front view of the working vehicle 3 in Fig. 11. It should be noted that the working vehicle 1 detached the seat 12 and provided with the chemical spraying device 70, an image pickup device 80, and the like makes the work vehicle 3. The working vehicle 3 has a configuration similar to that of the working vehicle 1 except for a configuration in regard to the chemical spraying device 70, image pickup device 80, and the like and description of the similar configuration will be omitted properly.

The working vehicle 3 includes, for example, a left-and-right pair of crawler traveling devices 10L, 10R, a connection frame 11 configured to connect the left-and-right pair of crawler traveling devices 10L, 10R, a direction sensor 13 attached to the connection frame 11, the chemical spraying device 70 configured to spray the chemicals, and the image pickup device 80 attached to the connection frame 11.

A covering 14 is attached to each of the left and right crawler traveling devices 10L, 10R. Each of the left and right crawler traveling devices 10L, 10R further includes built-in weighty heavy goods such as a motor as a drive source, fan, inverter, control unit, and battery which are not illustrated.

The chemical spraying device 70 includes a chemical tank 71 configured to accumulate the chemicals, a pump 72 configured to pump the chemicals, a spraying motor 73 configured to drive the pump 72, and a pipe 75 provided with a nozzle 74 configured to atomize the chemicals. The chemical tank 71, pump 72, and spraying motor 73 are detachably disposed in an upper part of the covering 14 of the left-hand crawler traveling device 10L. The pump 72 is coupled to the chemical tank 71 and pipe 75 through an unillustrated pipe. The spraying motor 73 is an electromotive motor and is controlled by the control unit included in the crawler traveling devices 10. An outlet of the nozzle 74 is capable of atomizing the chemicals in mist-like shapes. The pipe 75 is formed by combining a plurality of tubes. As similar to the connection frame 11, the pipe 75 is formed like a portal seen from a front view and is detachably attached to an inner part of the connection frame 11 so as to be suspended in the connection frame 11.

The pipe 75 seen from the front view is formed like a portal and includes three pipes 75a, 75c, 75b respectively disposed in a front part, back part, and central part in the longitudinal direction of the vehicle, and also includes five pipes 75d, 75e, 75f, 75g, 75h extending in the longitudinal direction and configured to connect the three pipes 75a, 75b, 75c. A plurality of nozzles 74 is attached to the three pipes 75a, 75b, 75c. The nozzle 74 is disposed inward so as to spray the chemicals toward a space 115 formed between the left and right crawler traveling devices 10L, 10R.

Driving the pump 72 by the spraying motor 73, the nozzle 74 sprays the chemicals. It should be noted that a spray amount of the chemicals can be adjusted by controlling operating time of the spraying motor 73 and rotation speed of the spraying motor 73 by the control unit. Accordingly, it is possible to spray the chemicals continuously or intermittently. The spray amount of the chemicals can also be adjusted by an opening of the nozzle 74. The chemicals should not be restricted and may be water, antiseptics, and the like.

Herein, similar to the working vehicle 1 and working vehicle 2, the working vehicle 3 includes the connection frame 11 formed like a portal and the space 115 formed between the left and right crawler traveling devices 10L, 10R. Therefore, it is possible to travel, striding over the crops, so that the crops can pass through the space 115 in the farm land such as the farm land 50 where the crop are planted with the rows formed. In this case, the working vehicle 3 sprays the chemicals by using the chemical spraying device 70 so that it can spray the chemicals on the crops which the vehicle strides over from an upper part and from both left and right sides. Therefore, it is possible to reduce a quantity of chemicals to be used and to spray the chemicals efficiently. Furthermore, the chemical spraying device 70 is detachably attached to the connection frame 11 and the like so that the working vehicle 3 is also applicable for uses other than the chemical spraying. For example, the working vehicle 3 is so user-friendly that it can be used as a vehicle for the worker to ride for the harvest operations as similar to the working vehicle 1.

The heavy goods such as the chemical tank 71, pump 72, and spraying motor 73 are disposed not in the connection frame 11 but in the left-hand crawler traveling device 10L. The pipe 75 is attached to the connection frame 11 so as to be suspended inside the connection frame 11, and a center of gravity of the pipe 75 is a substantial center in the vertical direction of the connection frame 11. Although the working vehicle 3 includes the chemical spraying device 70, the vehicle is configured to have a low center of gravity so that it is possible to travel stably even in the slope lands.

It should be noted that the chemical spraying device 70 is not restricted to the abovementioned configuration. The chemical spraying device 70 is preferably configured to spray the chemicals toward the space 115 formed between the left and right crawler traveling devices 10L, 10R. For example, the chemical spraying device 70 may also be configured to include a covering which covers an upper part and both left and right sides of the pipe 75 from outside. Due to such a configuration, the chemicals will be prevented from diffusing in the air so that the chemicals may be sprayed more efficiently. In addition to such a covering, the chemical spraying device 70 may also be configured to include an absorption device which absorbs chemicals floating in air inside the space 115. Furthermore, the chemical spraying device 70 may be configured to include a saucer which accumulates surplus chemicals provided to a lower part of the pipe 75.

The image pickup device 80 configured to capture the front of the working vehicle 3 is attached to a substantial center in the horizontal direction of a front part of an upper frame 16. The working vehicle 3 is configured to detect the crops planted with the rows formed based on an image captured by the image pickup device 80 and to travel autonomously along the rows of the crops.

The image pickup device 80 is, for example, a charge coupled device (CCD) camera and the image pickup device 80 captures the front in the forward direction. It should be noted that the image pickup device 80 is preferably configured to capture the front in the forward direction, and disposition and the number of the device may be appropriately designed. For example, the image pickup device 80 may be provided to the front part and back part of the upper frame 16 and may be configured to capture the front and the back.

Herein, the built-in control unit included in the crawler traveling devices 10 includes a detection unit configured to detect the rows of the crops by carrying out predetermined processing on the image in regard to the front of the working vehicle 3 captured by the image pickup device 80. The detection unit includes, for example, a program. Examples of the predetermined processing carried out by the detection unit include filtering processing, statistical processing, and the like. The predetermined processing is not restricted as long as the rows of the crops can be detected by the processing. For example, the detection unit is configured to carry out the filtering processing based on colors of the crops on the image captured by the image pickup device 80 and extract an area assumed to be the crops and carry out the statistical processing in regard to the extracted area so as to detect the rows of the crops. The control unit then controls the left and right crawler traveling devices 10L, 10R so as to travel along the rows of the detected crops.

According to such a configuration in which the vehicle can travel autonomously, the worker can spray the chemicals without being covered by the chemicals or inhaling the chemicals, which can reduce a burden on the worker. Furthermore, it is possible to reduce workloads in the management and to reduce a burden on the worker who operates the working vehicle, which improves operation efficiency.

It should be noted that the configuration which enable the working vehicle 3 to travel autonomously is not restricted to the abovementioned configuration. For example, the detection unit may also be configured to carry out the filtering processing based on the colors of furrows (ground) placed in both sides of the crops from the image captured by the image pickup device 80 and to extract areas assumed to the furrows and to carry out the statistical processing on the extracted areas so as to detect the furrows. In a case of applying such a configuration, the working vehicle 3 is configured to travel autonomously along the furrows. Similar effects can be achieved even from such a configuration.

Description with reference to drawings will be omitted, but the working vehicle 3, for example, may have a configuration in which GNSS is used so as to travel autonomously. In such as a configuration, for example, the working vehicle 3 further includes a GNSS receiving device, information in regard to traveling paths, autonomous traveling program for the working vehicle 3 to travel autonomously, sensors, and the like. The GNSS receiving device is configured to receive radio wave signals from a GNSS satellite. The sensors are configured to detect necessary information for the working vehicle 3 to travel autonomously, for example, a traveling speed and a three-dimensional posture of the working vehicle 3. The information in regard to traveling paths and the autonomous traveling program are stored in advance in a storage unit in the control unit. By using the control unit, the working vehicle 3 calculates a position of the working vehicle 3 based on the radio wave signals from the GNSS satellite and calculates a deviation between the calculated position and the traveling path and controls movements of the left and right crawler traveling devices 10L, 10R so that the working vehicle 3 travels along the traveling path. Accordingly, it is possible to travel autonomously along the path. It should be noted that the working vehicle 3 may also be configured to travel autonomously by combining detection of the crops based on the image captured by the image pickup device 80 with the GNSS. Due to such a configuration, it is possible to travel autonomously with greater accuracy along the rows of the crops.

Furthermore, the working vehicle 3 may also be configured to include a detection sensor which detects the crops passing through the space 115 between the left and right crawler traveling devices 10L, 10R and to adjust an error of a track of the autonomous traveling based on a detection value of the detection sensor. Applicable examples for the detection sensor include a contact or noncontact sensor such as an infrared sensor and ultrasonic sensor. The control unit may also be configured to distinguish positions of the crops passing through the space 115 between left and right crawler traveling devices 10L, 10R based on the detection value of the detection sensor and to adjust the error of the track of the autonomous traveling based on the position.

Preferably, the device included in the working vehicle 3 is those used for management of the farm land and should not be restricted to the chemical spraying device 70. For example, the working vehicle 3 may also be configured to include a rake, used for weeding, attached to the back part of the left and right crawler traveling devices 10L, 10R or may be configured to include a reaping device which prunes the crops passing through the space 115, disposed as similar to the pipe 75 of the chemical spraying device 70. Alternatively, the working vehicle 3 may be configured to include a fertilizing device or may be connected with a trolley for carrying harvests. The working vehicle 3 may also be provided with a communication device which transmits and receives information to and from the outside, and may be configured not to travel autonomously but to be controlled remotely by the worker operating the working vehicle 3 by using an outside operation device.

The working vehicles 1, 2, 3 according to the present embodiment should not be restricted in size. Each of the working vehicles 1, 2, 3 may have, for example, a full length of approximately 2500 mm, a width of approximately 1500 mm, and a height of approximately 2000 mm. In a case where the working vehicles 1, 2, 3 have such sizes, each crawler traveling device 10 may have a full length of approximately 2500 mm, a width of approximately 500 mm, and a height of approximately 600 mm. The recess 27 formed inside each crawler traveling device 10 may have a length of approximately 1500 mm in the longitudinal direction, a width of approximately 300 mm in the horizontal direction, and a height of approximately 250 mm.

The working vehicles 1, 2, 3 according to the present embodiment described as above may be combined freely within a scope with no inconsistency. For example, the working vehicle 1 may be configured to include the connection frame 111 of the working vehicle 2 in place of the connection frame 11, and the working vehicle 1 may be provided with the image pickup device 80 of the working vehicle 3 so as to travel autonomously.

### Industrial Applicability

The working vehicle according to an embodiment of the present invention is applicable to a working vehicle which carries out harvest operations of fruit crops such as grapes, pears, strawberries, tomatoes, and cherries in various farm lands such as fields and orchards. Especially, the working vehicle herein is useful for harvest operations of fruit crops which are planted with rows formed.

### Reference Signs List

- 1, 2, 3: WORKING VEHICLE
- 10: CRAWLER TRAVELING DEVICE
- 11, 111: CONNECTION FRAME
- 12: SEAT
- 13: DIRECTION SENSOR
- 14: COVERING
- 26: MOTOR (DRIVE SOURCE)
- 30: CONTROL UNIT
- 31: BATTERY
- 35: ROTARY SENSOR
- 60: ENGINE
- 61: GENERATOR
- 70: CHEMICAL SPRAYING DEVICE

## Claims

1. A working vehicle (1; 2; 3) comprising:
left crawler traveling devices (10L) and right crawler traveling devices (10R); and
a connection frame (11; 111) configured to connect the left and right crawler traveling devices (10L, 10R) and formed like a portal having a predetermined height,
**characterized in that**
each of the crawler traveling devices (10L, 10R) includes built-in battery (31), fan (28), inverter (29), control unit (30), and motor (26), so as to be independently movable, wherein the motor is an electromotive motor (26L, 26R) as drive source.

2. The working vehicle (1; 2; 3) according to claim 1, comprising:
the control unit (30) configured to control the crawler traveling devices (10L, 10R); and
a direction sensor (13) configured to detect the forward direction,
wherein each of the crawler traveling devices (10L, 10R) includes a rotary sensor (35) configured to detect rotation frequency of the motor, and
the control unit (30) is configured to tune traveling speeds of the crawler traveling devices (10L, 10R) based on detection values of the direction sensor (13) and the rotary sensor (35).

3. The working vehicle (1; 2; 3) according to claim 2, wherein
the control unit (30) is configured to tune the traveling speeds of the crawler traveling devices (10L, 10R) based on a detection value of a speed sensor as well as the detection values of the direction sensor (13) and the rotary sensors (35L, 35R) the working vehicle (1; 2; 3) being configured to travel in a target forward direction by adjusting skids of the crawler traveling devices (10L, 10R) with respect to the ground so as to travel stably.

4. The working vehicle (1; 2; 3) according to claim 3, wherein
the direction sensor (13) is disposed in a substantial center of the connection frame (11; 111) in a horizontal direction.

5. The working vehicle (2) according to any of claims 1 to 4, wherein
at least one of the crawler traveling devices (10L, 10R) includes an engine (60) and generator (61), and
electric power generated in the generator (61) is accumulated in the battery (31).

6. The working vehicle (1; 2) according to any one of claims 1 to 5, wherein
each of the crawler traveling devices (10L, 10R) includes a covering (14) configured to cover an upper part and both left and right sides of each of the crawler traveling devices (10L, 10R), and
a seat (12) where a worker sits down is attached to an upper part of the covering (14) of at least one of the crawler traveling devices (10L, 10R).

7. The working vehicle (3) according to any one of claims 1 to 6, wherein
a chemical spraying device (70) configured to atomize chemicals toward between the left-and-right pair of crawler traveling devices (10L, 10R) is detachably attached to the connection frame (11).

8. The working vehicle (3) according to any one of claims 1 to 7, wherein
the working vehicle (3) is configured to travel autonomously or to be controlled remotely.

## Patentansprüche

1. Arbeitsfahrzeug (1; 2; 3), umfassend:
linke Raupenkettenfahrvorrichtungen (10L) und rechte Raupenkettenfahrvorrichtungen (10R); und
einen Verbindungsrahmen (11; 111), der konfiguriert ist, um die linken und rechten Raupenkettenfahrvorrichtungen (10L, 10R) zu verbinden, und wie ein Portal ausgebildet ist, das eine vorbestimmte Höhe hat,
**dadurch gekennzeichnet, dass**
jede der Raupenkettenfahrvorrichtungen (10L, 10R) eingebaut eine Batterie (31), einen Lüfter (28), einen Inverter (29), eine Steuereinheit (30) und einen Elektromotor (26L, 26R) als Antriebsquelle enthält.

2. Arbeitsfahrzeug (1; 2; 3) nach Anspruch 1, umfassend:
die Steuereinheit (30), die konfiguriert ist, um die Raupenkettenfahrvorrichtungen (10L, 10R) zu steuern; und
eine Richtungssensor (13), der konfiguriert ist, um die Vorwärtsrichtung zu erfassen,
wobei jede der Raupenkettenfahrvorrichtungen (10L, 10R) einen Rotationssensor (35) enthält, der konfiguriert ist, um eine Drehfrequenz des Motors zu erfassen, und
die Steuereinheit (30) konfiguriert ist, um Fahrgeschwindigkeiten der Raupenkettenfahrvorrichtungen (10L, 10R) basierend auf Erfassungswerten des Richtungssensors (13) und des Rotationssensors (35) abzustimmen.

3. Arbeitsfahrzeug (1; 2; 3) nach Anspruch 2, wobei
die Steuereinheit (30) konfiguriert ist, um die Fahrgeschwindigkeiten der Raupenkettenfahrvorrichtungen (10L, 10R) basierend auf einem Erfassungswert eines Geschwindigkeitssensors sowie den Erfassungswerten des Richtungssensors (13) und der Rotationssensoren (35L, 35R) abzustimmen, wobei das Arbeitsfahrzeug (1; 2; 3) konfiguriert ist, um durch Einstellen von Gleitstücken bzw. Schleudervorgängen der Raupenkettenfahrvorrichtungen (10L, 10R) in Bezug auf den Boden, um stabil zu fahren, in einer Soll-Vorwärtsrichtung zu fahren.

4. Arbeitsfahrzeug (1; 2; 3) nach Anspruch 3, wobei
der Richtungssensor (13) in einem wesentlichen Zentrum des Verbindungsrahmens (11; 111) in einer horizontalen Richtung angeordnet ist.

5. Arbeitsfahrzeug (2) nach einem der Ansprüche 1 bis 4, wobei
wenigstens eine der Raupenkettenfahrvorrichtungen (10L, 10R) einen Motor bzw. eine Antriebsmaschine (60) und einen Generator (61) enthält, und
im Generator (61) erzeugte elektrische Energie in der Batterie (31) gespeichert wird.

6. Arbeitsfahrzeug (1; 2) nach einem der Ansprüche 1 bis 5, wobei
jede der Raupenkettenfahrvorrichtungen (10L, 10R) eine Abdeckung (14) enthält, die konfiguriert ist, um einen oberen Teil und sowohl rechte als auch linke Seiten von jeder der Raupenkettenfahrvorrichtungen (10L, 10R) zu bedecken, und
ein Sitz (12), wo sich ein Arbeiter hinsetzt, an einem oberen Teil der Abdeckung (14) von wenigstens einer der Raupenkettenfahrvorrichtungen (10L, 10R) angebracht ist.

7. Arbeitsfahrzeug (3) nach einem der Ansprüche 1 bis 6, wobei
eine Chemikalien-Sprühvorrichtung (70), die konfiguriert ist, um Chemikalien in eine Richtung zwischen dem links-und-rechts-Paar von Raupenkettenfahrvorrichtungen (10L, 10R) zu sprühen, abnehmbar am Verbindungsrahmen (11) angebracht ist.

8. Arbeitsfahrzeug (3) nach einem der Ansprüche 1 bis 7, wobei
das Arbeitsfahrzeug (3) konfiguriert ist, um autonom zu fahren oder fernbedient zu werden.

## Revendications

1. Véhicule de travail (1, 2, 3) comprenant :
des dispositifs de déplacement à chenilles gauche (10L) et droite
(10R), et
un cadre de raccordement (11, 111) configuré pour raccorder les dispositifs de déplacement à chenilles gauche et droite (10L, 10R) et formé comme un portique ayant une hauteur prédéterminée,
**caractérisé en ce que** chaque dispositif de déplacement à chenilles (10L, 10R) inclut une batterie intégrée (31), un ventilateur (28), un inverseur (29), une unité de commande (30) et un moteur (26) de sorte à pouvoir être déplacé indépendamment, le moteur étant un électromoteur (26L, 26R) comme source d'entraînement.

2. Véhicule de travail (1, 2, 3) suivant la revendication 1, comprenant :
l'unité de commande (30) configurée pour commander les dispositifs de déplacement à chenilles (10L, 10R), et
un capteur de direction (13) configuré pour détecter la direction de marche avant,
chaque dispositif de déplacement à chenilles (10L, 10R) incluant un capteur rotatif (5) configuré pour détecter la fréquence de rotation du moteur, et
l'unité de commande (30) est configurée pour accorder les vitesses de déplacement des dispositifs de déplacement à chenilles (10L, 10R) sur la base de valeurs de détection du capteur de direction (13) et du capteur rotatif (35).

3. Véhicule de travail (1, 2, 3) suivant la revendication 2, dans lequel
l'unité de commande (30) est configurée pour accorder les vitesses de déplacement des dispositifs de déplacement à chenilles (10L, 10R) sur la base d'une valeur de détection d'un capteur de vitesse, ainsi que sur la base des valeurs de détection du capteur de direction (13) et des capteurs rotatifs (35L, 35R), le véhicule de travail (1,2,3) étant configuré pour se déplacer dans une direction de marche avant an réglant des galets des dispositifs de déplacement à chenilles (10L, 10R) par rapport au sol de sorte à se déplacer de façon stable.

4. Véhicule de travail (1, 2, 3), suivant la revendication 3, dans lequel
le capteur de direction (13) est disposé essentiellement au centre du cadre de raccordement (11, 111) dans une direction horizontale.

5. Véhicule de travail (2) suivant une des revendications 1 à 4, dans lequel
au moins un des dispositifs de déplacement à chenilles (10L, 10R) inclut un moteur (60) et un générateur (61), et
la puissance électrique générée dans le générateur (61) est accumulée dans la batterie (31).

6. Véhicule de travail (1, 2) suivant une des revendications 1 à 5, dans lequel
chaque dispositif de déplacement à chenilles (10L, 10R) inclut un habillage (14) configuré pour recouvrir une partie supérieure et les côtés gauche et droite de chaque dispositif de déplacement à chenilles (10L, 10R), et
un siège (12), sur lequel s'assoit un ouvrier, est fixé à une partie supérieure de l'habillage (14) d'au moins un des dispositifs de déplacement à chenilles (10L, 10R).

7. Véhicule de travail (3) suivant une des revendications 1 à 6, dans lequel
un dispositif pulvérisateur de produits chimiques (70) configuré pour pulvériser des produits chimiques vers et entre la paire de dispositifs de déplacement à chenilles gauche et droite (10L, 10R) est fixé de façon amovible au cadre de raccordement (11).

8. Véhicule de travail (3) suivant une des revendications 1 à 7, dans lequel
le véhicule de travail (3) est configuré pour se déplacer de façon autonome ou pour être commandé à distance.
